(19) Europäisches Patentamt
European Patent Office
Office européen des brevets

(11) **EP 4 666 851 A1**

(12) **EUROPEAN PATENT APPLICATION**

(43) Date of publication:
24.12.2025 Bulletin 2025/52

(21) Application number: 25182653.3

(22) Date of filing: 13.06.2025

(51) International Patent Classification (IPC):
**A01K 45/00** (2006.01)

(52) Cooperative Patent Classification (CPC):
**A01K 45/005; A01K 45/00;** G06T 7/20;
G06T 2207/30241; G06T 2207/30242

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **18.06.2024  IT 202400013957**

(71) Applicant: **Ciemmecalabria S.r.l.
25046 Cazzago San Martino (BS) (IT)**

(72) Inventors:
• **CALABRIA, PAOLO**
  **I-25046 Cazzago San Martino, Brescia (IT)**
• **CALABRIA, EUGENIO**
  **I-25046 Cazzago San Martino, Brescia (IT)**

(74) Representative: **Colombo, Stefano Paolo et al
Marchi & Partners S.r.l.
Via Vittor Pisani, 13
20124 Milano (IT)**

(54) **SYSTEM AND METHOD FOR COUNTING POULTRY OR THE LIKE IN A CAGING MACHINE**

(57)    A description is provided of a counting system for counting poultry in a caging machine configured to convey poultry on a conveyor belt in order to introduce them into a cage. The system comprises:

an acquisition group for acquiring a sequence of images of a same portion of the conveyor belt during successive time instants;

a processing apparatus comprising:

an identification unit for processing the sequence of images in order to identify the presence of the poultry in the each image;

a tracking unit for calculating poultry tracks based on the identified poultry presence, each poultry track indicating the path followed by a respective bird along the conveyor belt;

a counting unit configured to calculate a count indicating a number of birds that have reached the cage on the basis of the calculated tracks;

an output unit for outputting the calculated count for control of the caging machine.

Fig. 1B

**Description**

TECHNICAL SECTOR

The present invention relates to the sector of rearing poultry animals, such as chickens, guinea fowl, turkeys or similar animals.

PRIOR ART

It is known that most of the poultry animals (henceforth referred to more simply as "poultry") intended for slaughtering are currently reared in sheds or the like. Thousands of poultry are reared in the sheds using very advanced rearing techniques. Intensive rearing systems of this type allow the farm managers to achieve significant economies-of-scale which result in economic advantages for consumers who acquire cuts of meat from animals reared using these techniques. Moreover, these types of intensive rearing systems result in a substantial uniformity of the reared animals. After a certain predefined period of time the reared poultry reach the correct weight and are ready to be slaughtered.

At the end of the rearing period, the live animals must be removed, without causing them injury or unacceptable suffering, from the shed where they were reared and then taken to the next stages in the supply chain, i.e. typically transported to the slaughterhouse.

Machines for removing the poultry from the rearing sheds and arranging them inside cages are known. The cages filled with poultry are then loaded onto lorries or their trailers and transported to the slaughterhouse.

The removal (or caging) operations are typically performed using special machines, commonly known as "poultry loading machines" (for example "chicken loading machines" in the case where the poultry consists of chickens) or "caging machines".

At present, operation of the caging machines is based on the weight of the animals loaded into the cages, with a standard - statistically determined - weight of a single animal, for example a chicken, being set in the caging machine; the cage being filled is weighed by means of a weighing system positioned underneath the cage itself. Whenever a new empty cage reaches the loading/filling position, the weight is zeroed in order to determine the tare weight of the cage itself; in the caging machine the overall weight of the animals to be loaded in each cage is set and, when the set weight for each cage is reached, the caging machine stops, the cage is considered filled and the next cage is then filled. Determination of the quantity (number) of animals, for example chickens, which are placed in each cage is therefore performed in an indirect manner, based on a standard statistical weight of the single animal; and the overall weight of the cage.

SUMMARY OF THE INVENTION

The Applicant has noted that the known systems for removing the poultry from the rearing sheds and caging them have major drawbacks.

In particular the detection of the overall weight of the animals removed from the rearing shed is performed inside the cage itself. Therefore determination of the filled state of the cage occurs always with a delay; for example, if a cage must be filled with 100 animals and, by means of weighing, the machine determines that at a certain moment a cage weight corresponding to 99 units of standard weight has been reached, it is difficult to ensure that the machine will stop exactly when 100 animals have been loaded; in fact, if on the conveyor belt there are several animals bunched together, it is likely that more animals than the last animal needed to reach the total of 100 will enter into the cage. This therefore results in cages which are generally filled with a number of animals different from that required.

Another inherent problem in the indirect determination of the quantity (number) of animals, for example chickens, which are present in each single cage, based on a standard statistical weight of the single animal and on the overall weight of the cage, i.e. by means of division of the overall weight of the cage by the average statistical weight of the said animals, is that not all the animals are the same, the weight of each single animal is different from that of other animals, and therefore the indirectly calculated number is not correct. However, the slaughterhouse, when informing the rearing farm about the loading data, will request the consignment of a specific number of animals to be slaughtered, and not a number corresponding to their overall weight.

Furthermore, in the event of checks carried out by the authorities during transportation, for example in connection with animal protection rights, the only way for them to check compliance with these rights is by counting the number of animals in order to determine whether the filling coefficient per square centimetre is being respected.

Further problems also arise from the fact that many slaughterhouse companies, in particular those abroad, pay the rearing farmers for the animals "per head" and not on a weight basis, and likewise the teams of operators responsible for loading the reared poultry are paid according to the number of animals loaded, and not the overall weight.

In view of the above, the Applicant has devised a system and a method for counting poultry or the like in a caging machine which are able to overcome the drawbacks associated with the known solutions.

One aspect of the present invention relates to a counting system for counting poultry in a caging machine configured to convey poultry on a conveyor belt in order to introduce them into a cage.

The counting system comprises an acquisition group for acquiring a sequence of images of the same portion of said conveyor belt during successive time instants.

The counting system further comprises a processing apparatus.

The processing apparatus comprises an identification unit configured to process the sequence of images in order to identify the presence of said poultry in each image.

The processing apparatus comprises a tracking unit configured to calculate poultry tracks based on the identified poultry presence.

Each poultry track indicates the path followed by a respective bird along the conveyor belt.

The processing apparatus comprises a counting unit configured to calculate a count indicating a number of birds that have reached the cage on the basis of the calculated tracks.

The processing apparatus comprises an output unit for outputting the calculated count for control of the caging machine.

According to an embodiment of the present invention, said identification unit comprises an object detection unit which implements a neural network model trained to optimize the ability of said neutral network model to recognize the poultry presence in images.

According to an embodiment of the present invention, said neural network model is trained with a set of training images comprising training images depicting poultry.

According to an embodiment of the present invention, at least a portion of said training images depicting poultry have been subjected to one or more of the following data augmenting operations:

- image flip;
- image rotation;
- image scaling;
- image translation;
- image saturation variation;
- image hue variation;
- image brightness variation.

According to an embodiment of the present invention, the identification unit and the tracking unit are configured to operate asynchronously and independently to each other.

According to an embodiment of the present invention, said identification unit comprises an object detection unit configured to calculate, for each poultry presence identified in an image, coordinates of a corresponding bounding box indicating a position and a space occupied by said poultry presence in said image.

According to an embodiment of the present invention, said tracking unit implements a tracking algorithm configured to calculate each poultry track corresponding to a bird based on the evolution over time of the coordinates of the bounding boxes calculated for the presence of said bird in the images of said image sequence.

According to an embodiment of the present invention, said counting unit is configured to update a counter whenever the coordinates of a bounding box of a poultry track have reached or exceeded threshold values indicating that the corresponding bird has reached the cage.

According to an embodiment of the present invention, said threshold values correspond to coordinates of a line in said image.

According to an embodiment of the present invention, said threshold values correspond to coordinates of a bidimensional region in said image.

According to an embodiment of the present invention, said acquisition group and said processing apparatus are part of a single embedded hardware unit.

According to an embodiment of the present invention, said counting system further comprises a buffer configured to temporarily store one or more images of said sequence of images.

According to an embodiment of the present invention, the identification unit is configured to process one of the images stored in the buffer to identify the presence of said poultry.

According to an embodiment of the present invention, said acquisition group comprises a camera or a video camera which captures said portion of said conveyor belt.

According to an embodiment of the present invention, said acquisition group comprises an illuminating device for illuminating said portion of said conveyor belt.

According to an embodiment of the present invention, said camera or video camera is an infrared camera or video camera, and said illuminating device is an infrared illuminating device.

According to an embodiment of the present invention, said portion of said conveyor belt comprises at least one portion of the conveyor belt before the entrance to said cage.

Another aspect of the present invention relates to a caging machine.

The caging machine comprises a conveyor belt for conveying poultry towards a cage and the counting system.

According to an embodiment of the present invention, the caging machine further comprises a control unit in communication with the output unit of the counting system, wherein said control device is configured to stop the conveyor belt or to direct the conveyor belt towards another cage when the calculated count has reached a value corresponding to a predefined target value of poultry.

A further aspect of the present invention relates to a method for counting poultry in a caging machine configured to convey poultry on a conveyor belt in order to introduce them into a cage.

The method comprises acquiring a sequence of images of a same portion of said conveyor belt during successive time instants.

The method comprises processing the sequence of images in order to identify the presence of said poultry in each image.

The method comprises calculating poultry tracks on the basis of the poultry presence identified, each poultry track indicating the path followed by a respective bird along the conveyor belt.

The method comprises calculating a count indicating a number of birds that have reached the cage on the basis of the calculated tracks.

The method comprises outputting the calculated count for control of the caging machine.

BRIEF DESCRIPTION OF THE DRAWINGS

A detailed description of the invention now follows, being provided purely by way of a non-limiting example, to be read with reference to attached sets of drawings in which:

| | |
|---|---|
| Fig. 1A and Fig. 1B | are axonometric views of examples of caging machines according to embodiments of the present invention; |
| Fig. 2 | shows in schematic form the hardware block diagram of a processing apparatus for a caging machine according to an embodiment of the present invention; |
| Fig. 3 | shows main software components which may be used for counting the number of birds performed by the processing apparatus in accordance with an embodiment of the present invention; |
| Fig. 4 | shows a possible example of output data generated by an identification unit of the processing apparatus according to an embodiment of the present invention; |
| Fig. 5 | shows an example of generation of tracks generated by a tracking unit of the processing apparatus according to an embodiment of the present invention; |
| Fig. 6 | shows in the form of functional blocks the main operations performed by the counting system in order to count the poultry during loading thereof into a cage by the caging machine according to an embodiment of the present invention. |

DETAILED DESCRIPTION OF EMBODIMENTS

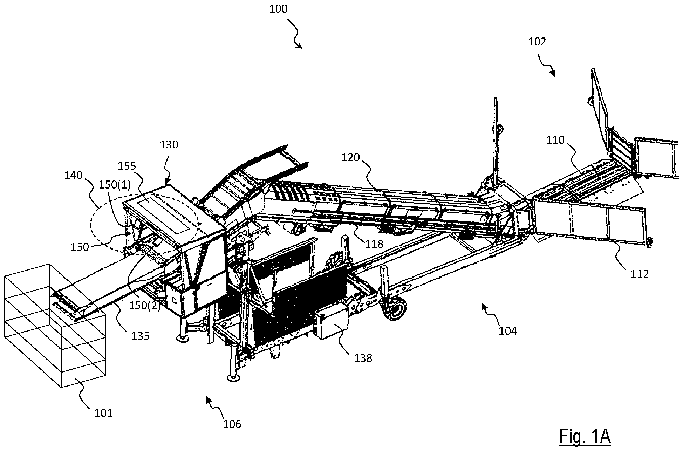

With reference to the attached figures, in which identical reference numbers refer to identical or functionally equivalent parts, Fig. 1A is an axonometric view of a caging machine 100 for caging poultry in cages 101 to which the concepts in accordance with embodiments of the present invention may be applied.

According to an embodiment of the present invention, the caging machine 100 comprises a rear section 102 for collecting the poultry, a central conveying and raising section 104, and a front caging section 106.

According to an embodiment of the present invention, the birds are collected from the ground at the rear section 102.

According to an embodiment of the present invention, the rear section 103 comprises a pick-up conveyor belt 110 extending along the longitudinal direction of the caging machine 100.

In accordance with an embodiment of the present invention, the pick-up conveyor belt 110 receives the birds from the ground and transfers them to the central section 104. In accordance with an example of embodiment of the present invention, the pick-up conveyor belt 110 comprises a belt endlessly wound around a drive roller and an idle roller. Similar considerations are applicable also to cases where the pick-up conveyor belt 110 has a different structure.

According to an embodiment of the present invention, the rear section 102 further comprises movable (for example directable) barriers 112 for fencing off the pick-up zone and directing the birds towards the pick-up conveyor belt 110.

According to an embodiment of the present invention, the central section 104 is configured to transport the birds from the rear section 102, in particular from the pick-up conveyor belt 110, to the front section 106.

According to an embodiment of the present invention, the central section 104 comprises a transport conveyor belt 118, preferably provided with a roof 120 so as to define a closed channel for transporting the birds from the rear section 102 to the front section 106.

In accordance with an example of embodiment of the present invention, the transport conveyor belt 118 comprises a belt endlessly wound around a drive roller and an idle roller. Similar considerations are applicable also to cases where the transport conveyor belt 118 has a different structure.

According to an embodiment of the present invention, the transport conveyor belt 118 has a first end connected to (for example hinged with) the rear section 102 in the vicinity of the pick-up conveyor belt 110 and may be raised and lowered for loading the transported birds into cages 101 situated at different heights. For example, the cages 101 may be arranged stacked on each other, and the birds are loaded starting with the cage which is located highest up until the lowest cage is reached, or vice versa.

According to an embodiment of the present invention, the front section 106 comprises a caging group 130 designed to receive the birds transported by the transport conveyor belt 118 at one end of the latter.

According to an embodiment of the present invention, the caging group 130 is configured to be raised and lowered so as that it can be positioned at a suitable height depending on the height of the cage 101 to be filled. For example, after a cage 101 has been filled, the caging group 130 is displaced downwards until it reaches the level of an underlying cage 101.

According to an embodiment of the present invention, the caging group 130 comprises a loading conveyor belt 135 designed to receive the birds from the transport conveyor belt 118.

In accordance with an example of embodiment of the present invention, the loading conveyor belt 135 comprises a belt endlessly wound around a drive roller and an idle roller. Similar considerations also apply to cases where the loading conveyor belt 135 has a different structure. According to an embodiment of the present invention, the movement speed of the loading conveyor belt 135 may range from 70 to 120 meters per minute.

According to an embodiment of the present invention, the loading conveyor belt 135 is configured to transport the birds inside a cage 101.

According to an embodiment of the present invention, the loading conveyor belt 135 is configured to perform a translation movement between a rest position, retracted inside the caging group 120, into a completely extended position, passing through a plurality of intermediate extended positions. Fig. 1A shows the loading conveyor belt 135 in the completely extended position, with said conveyor belt which extends inside a cage 101 as far as the bottom thereof.

According to an embodiment of the present invention, the rest position of the loading conveyor belt 135 is used when the caging machine 100 is inactive and when the caging group 130 is displaced vertically (for example lowered) in order to be aligned with a new cage 101 (for example, located at a lower height).

According to an embodiment of the present invention, the completely extended position of the loading conveyor belt 135 is the position where the birds are transported as far as the bottom of cage 101. As the cage 101 is filled, the loading conveyor belt 135 is gradually retracted so as to fill the other zones of the cage 101 until a zone close to an opening of the cage 101 is reached and filled last.

According to an embodiment of the present invention, the loading conveyor belt 135 may be inclined with respect to the horizontal plane (e.g., the ground), for example within a range of -10, + 30 degrees.

According to an embodiment of the present invention, operation of the caging machine 100 (which comprises, among other things, movement of the conveyor belts 112, 118, 135, raising/lowering of the caging group 130 and extension/inclination of the loading conveyor belt 135) is controlled by one (or more) electronic/-electromechanical control units (for example coupled to one or more hydraulic units), which are denoted overall by the reference number 138.

It is emphasized that the caging machine 100 shown in Fig. 1A is to be understood as being only one possible example of a caging machine to which the present invention may be applied. The concepts in accordance with embodiments of the present invention may in fact be directly applied also to other types or models of caging machines which are different from the machine 100 shown in Fig. 1A.

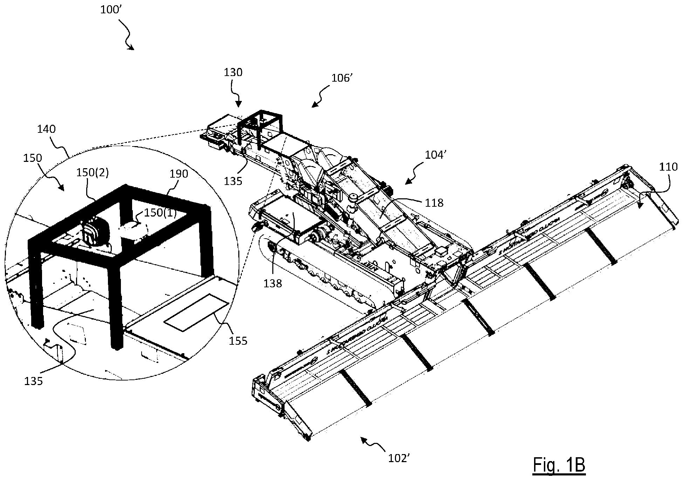

In this connection, Fig. 1B shows a further example of a caging machine, denoted overall by the reference number 100', to which the concepts of the present invention may be applied.

The general operation of the caging machine 100' according to Fig. 1B is substantially equivalent to that of the caging machine 100 according to Fig. 1A.

Without going into details which would unnecessarily complicate the present description, according to an embodiment of the present invention the caging machine 100' also comprises:

- a front section 102' for picking up the birds (corresponding to the rear section 102 of the caging machine 100) comprising pick-up conveyor belts 110 arranged along the longitudinal direction of the caging machine 100;
- a central transporting and raising section 104' (corresponding to the central section 104 of the caging machine 100) comprising a transport conveyor belt 118 for transporting the birds from the front section 102' to the rear section 106';
- a rear caging section 106' (corresponding to the front section 106 of the caging machine 100) comprising a caging group 130 provided with a loading conveyor belt 135 for receiving the birds from the transport conveyor belt 118 and for transporting them into a cage (not shown in Fig. 1B);
- a control unit 138 (corresponding to the control unit 138 of the caging machine 100) for controlling the operation of the caging machine 100.

According to an embodiment of the present invention, the caging machine 100' is a self-propelled caging machine, particularly suited for being moved from farm to farm for the caging of poultry at the end of their growth cycle before being taken to the slaughterhouse.

According to an embodiment of the present invention, a counting system, denoted overall by the reference number 140, is installed or can be connected to the caging machine 100, 100' in order to count the number of birds which enter the cages 101 during the cage loading operations.

According to an embodiment of the present invention, the counting system 140 comprises an acquisition group 150 and a processing apparatus 155. According to another embodiment of the present invention, the acquisition group 150 and the processing apparatus 155 may be part of a single embedded hardware unit. In this way, a good compromise among computational power, energy efficiency and compact size can be achieved, particularly suited for on-site applications.

According to an embodiment of the present invention, the acquisition group 150 is configured to acquire a sequence of images I(t(0)), I(t(1)), ..., I(t(i)), ..., I(t(n)) (of a same portion) of the loading conveyor belt 135 during successive time instants t(0), t(1), ...,t(i), ..., t(n).

According to an embodiment of the present invention, the acquisition group 150 is located in the proximity of the caging group 130. However, the concepts of the present invention may also be applied to cases where the acquisition group 150 is differently positioned, provided that it is able to capture correctly the loading conveyor belt 135 (or at least a portion thereof).

According to an example of embodiment shown in Fig. 1B, the acquisition group 150 is located on a support frame 190 situated above the loading conveyor belt 135 (visible in detail in Figure 1B in the enlarged view of a portion of the caging group).

According to an embodiment of the present invention, the acquisition group 150 comprises at least one image acquisition device (for example, a camera or a video camera), identified by means of the reference number 150(1), directed so as to capture at least one portion of the loading conveyor belt 135. In accordance with an embodiment of the present invention, the portion of the loading conveyor belt 135 captured by the image acquisition device 150(1), and therefore the subject of the images I(t(0)), I(t(1)), ..., I(t(i)), ..., I(t(n)), comprises at least a portion of the loading conveyor belt 135, preferably a central portion of the loading conveyor belt 135. In the case where the image acquisition device 150(1) is a camera, the images I(t(0)) I(t(1)), ..., I(t(i)), I(t(n)) are images acquired during respective time instants t(0), t(1), ..., t(i), ..., t(n), while in the case where the image acquisition device 150(1) is a video camera, the images I(t(0)) I(t(1)), ..., I(t(i)), I(t(n)) are photograms (frames) of a video acquired by the video camera, corresponding to respective time instants t(0), t(1), ..., t(i), ..., t(n).

According to an embodiment of the present invention, the acquisition group 150 may also comprise at least one illuminating device, identified by means of the reference number 150(2) and configured to illuminate the portion of the loading conveyor belt 135 captured by the image acquisition device 150(1).

In accordance with an embodiment of the present invention, the image acquisition device 150(1) is an infrared camera or video camera, and the illuminating device 150(2) is an infrared illuminating device. In this way, advantageously it is possible to obtain images I(t(i)) of the birds which are loaded inside the cage 101 without disturbing the animals with light which is visible to the naked eye.

According to an embodiment of the present invention, the processing apparatus 155 is configured to count the number of birds which enter into the cages 101 by processing the sequence of images I(t(0)), I(t(1)), ..., I(t(i)), ..., I(t(n)) generated by the image acquisition device 150(1).

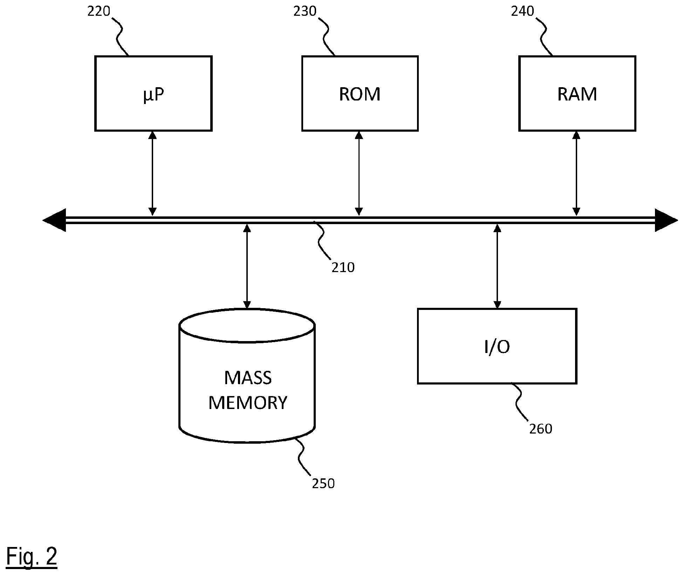

With reference to Fig. 2, the processing apparatus 155 comprises different units which are connected together by means of a bus structure 210. In particular a microprocessor 220, or several of them, provide(s) a logic capacity of the processing apparatus 155. A non-volatile memory (ROM) 230 stores a basic code for a bootstrap of the processing apparatus and a volatile memory (RAM) 240 is used as a working memory by the microprocessor 220. The processing apparatus 155 is equipped with a mass memory 250 for storing programs and data, for example, a solid state disc (SSD). Moreover, the processing apparatus 155 comprises a number of controllers 260 for input/output units, such as network adapters, serial adapters, drives for reading/writing removable data storage units, keyboards, display devices. Advantageously, the processing apparatus 155 is able to exchange data/commands with the image acquisition device 150(1) (in order to receive the images I(t(0)), I(t(1)), ..., I(t(i)), ..., I(t(n))) and with the control unit 138 of the caging machine 100, 100' (in order to provide a count indicating the number of birds which have entered the cages 101).

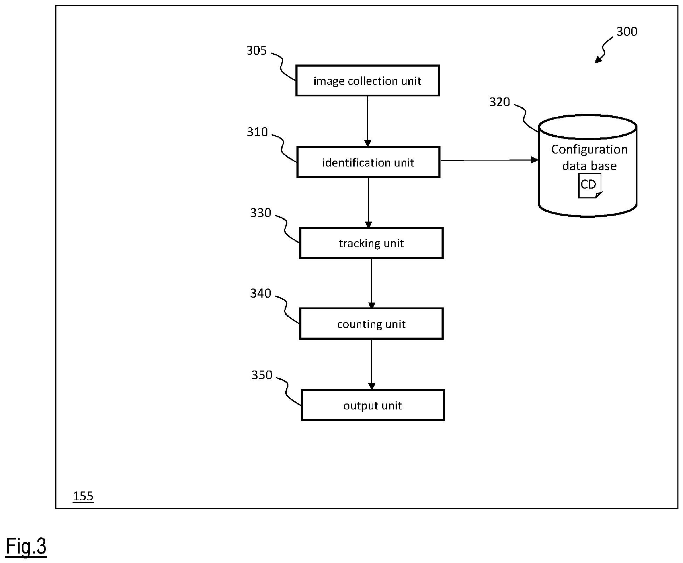

With reference to Fig. 3, main software components (below also called "software units" or simply "units") are shown and may be used for a count of the number of birds which have entered the cages 101, performed by the processing apparatus 155 in accordance with an embodiment of the present invention.

All the software components (programs and data) are identified overall by the reference number 300.

The software components 300 are typically stored in the mass memory of the processing apparatus 155 and loaded (at least partly) in the working memory of the processing apparatus 155 when the programs are being executed, together with an operating system and other application programs not directly relevant for the solution of the present disclosure (and therefore not shown in the figures for simpler and clearer description). The programs are initially installed in the mass memory, for example by means of removable storage units or from the web. Each program may be or comprise a module, segment or portion of a code, which comprises one or more instructions which can be carried out in order to implement the specific logic function.

According to an embodiment of the present invention, an image collection unit 305 is configured to collect from the image acquisition device 150(1) the images I(t(0)), I(t(1)), ..., I(t(i)), ..., I(t(n)) on which the operations are carried out in order to perform the bird count. According to an embodiment of the present invention, the image collection unit 305 may also be configured to perform initial processing (pre-processing) of the collected images I(t(0)), I(t(1)), ..., I(t(i)), ..., I(t(n)), comprising for example one or more of the following operations:

    image cropping
    image scaling
    noise reduction by means of filtering

According to an embodiment of the present invention an identification unit 310 is configured to receive from the image collection unit 305 the images I(t(0)), I(t(1)), ..., I(t(i)), ..., I(t(n)) (which may have already undergone the aforementioned pre-processing) and to identify in each of said images received the presence of poultry (i.e. graphical representations).

In accordance with an embodiment of the present invention, an automatic learning (machine learning) model is used to:

- identify in each of the images I(t(0)), I(t(1)), ..., I(t(i)), ... , I(t(n)) the poultry presence O(k), and
- calculate, for each poultry presence identified in an image, the coordinates of a corresponding bounding box BB(k) (i.e. a rectangle with the smallest area measurement containing all the points which form the poultry presence) indicating a position and a space occupied by said poultry presence in said image,

applying machine learning techniques.

In short, machine learning is used to carry out a specific task (in this case, identification of poultry presence O(k), and the calculation of the coordinates of corresponding bounding boxes BB(k)) without using specific instructions, but by deducing automatically how to perform it from examples (making use of a corresponding model which has been learned from them). In the specific implementation in question, the identification of the poultry presences O(k) and the calculation of the corresponding bounding boxes BB(k) is performed by the identification unit 310 by processing the images received I(t(0)), I(t(1)), ... , I(t(i)), ... , I(t(n)) using a neural network model.

The neural network is a data processing system which resembles operation of the human brain. The neural network comprises basic processing elements (neurons) which carry out operations on the basis of corresponding weights The neurons are connected via unidirectional channels (synapses) which transfer data between them. The neurons are organized in layers which perform different operations.

In accordance with an embodiment of the present invention, the neural network used by the identification unit 310 comprises at least one input layer for receiving an input in the form of data which represents an image I(t(i)). The neural network used by the identification unit 310 also comprises an output layer for providing output data ID(i) which represents any poultry presence O(k) and, for each poultry presence O(k), coordinates (for example, of the vertices and the centre) of a corresponding bounding box BB(k).

In accordance with an embodiment of the present invention, the neural network used by the identification unit 310 is a convolutional neural network, i.e. a type of neural network comprising one or more convolutional layers which perform (cross) convolution operations. Each convolutional layer performs a convolutional operation (in sequence, on portions of the data) via a convolution matrix (called filter or kernel) defined by corresponding weights. The convolution operation is generally followed by further operations, comprising for example a normalization operation to adjust the mean and the variance of the data and the application of an activation function for the introduction of a non-linearity factor. In the case considered, the weights may for example represent a particular sought-after visual characteristic.

In accordance with an embodiment of the present invention, in the neural network used by the identification unit 310, one or more convolutional layers may be followed by a corresponding max-pooling layer configured to perform a sub-sampling procedure in order to allow a certain degree of translation invariance and reduce the computational load for the following layers.

In accordance with an embodiment of the present invention, the neural network used by the identification unit 310 may comprise furthermore final layers of the fully connected type, namely non-convolutional layers in which each output value of the output of a layer depends on all the input values of the input of that layer.

Non-limiting and illustrative examples of neural network models which can be used by the identification unit 310 may include neural network models exploited by the Ultralytics YOLO recognition models, such as the YOLO8 model.

In accordance with an embodiment of the present invention, the neural network used by the identification unit 310 is configured by reading access to a configuration database 320 (for example, stored in the mass memory 250 of the processing apparatus 155) containing configuration data CD defining a configuration of the neural network comprising a corresponding specific set of weight values of the neural network.

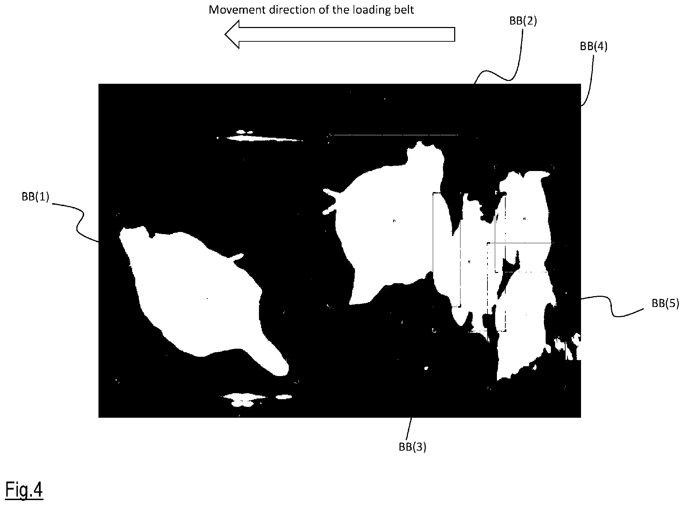

Fig. 4 shows a possible example of output data ID(i) generated by the identification unit 310 by processing a generic image I(t(i) acquired by the acquisition group 150 at the time instant t(i). In the example considered, in which 5 chickens may be seen, the identification unit identified K = 5 poultry presences O(k) (k = 1, 2, ..., K), calculating for each of them the coordinates of a respective bounding box BB(k).

According to an embodiment of the present invention, the configuration data CD which defines the configuration of the neural network used by the identification unit 310 were generated by means of suitable training aimed at optimization of the recognition of poultry in different conditions. For this reason, in accordance with an embodiment of the present invention, the training was performed using a sufficiently large training image sample (containing at least one thousand images) containing poultry presences and manually tracing (by means of a special labelling software) the bounding boxes around the poultry presences.

Exemplary and non-limitative training parameters may comprise one or more of the following:

- number of epochs (i.e, number of complete passes of the entire training dataset) equal to 1500;
- size of the training images of 416x416 pixels (for a good balance between accuracy and required computation load);
- batch size (i.e., number of training images used before each update of weight values) equal to 32;
- patience (i.e., number of allowed epochs to be performed without any training improvement) of 250 epochs for early stopping;
- training optimized to a single object class.

In order to improve the efficiency of the identification unit 310, the training images were chosen so as to cover the most important situations, adding to the simple images of clearly visible individual birds also images showing different situations where birds are grouped together, images of partially visible birds since concealed by other birds (in this case, the manual tracing of the bounding boxes was performed by comparing images of time instants prior to and/or following those of the image considered), images of birds with their wings open and wings closed, etc.

According to an embodiment of the present invention, optimized data augmentation techniques may be used to improve the training.

For example, in order to simulate real operative conditions, such as variations in orientation, camera distance, inclination and/or illumination, one or more of the following data augmenting operations may be carried out on the training images:

- image flip;
- image rotation;
- image scaling;
- image translation;
- image saturation variation;
- image hue variation;
- image brightness variation.

Moreover, in order to improve the robustness of the trained model with respect to image imperfections, noise, chromatic variations and small occlusions, a custom transformation pipeline may be applied during the loading of the training images, for example comprising the application of one or more of the following transformations:

- blurring;
- median blurring;
- graying;

- random brightness contrast;
- gauss noise;
- pixel dropout.

The specific final configuration of the training process, including the selection of the specific training model (e.g., YOLO8 model), the size of the training images (e.g., 416x416 pixels), the data augmentation operations (e.g., flip, rotation, scaling, ...) and the transformation pipeline (e.g., blurring, graying, ...) have been carried out by the Applicant in order to optimize the training so to improve the accuracy and robustness of the identifications of poultry occurrences carried out by the identification unit 310.

According to an embodiment of the present invention, in order to further increase the performances of the identification unit 310, particularly in the case the acquisition group 150 and the processing apparatus 155 are part of a single embedded hardware unit, a further optimization may be carried out by exploiting suitable software development kits optimized for embedded solutions.

According to an embodiment of the present invention, in order to further improve the performances of the identification unit 310, and guarantee integrity of the results, the acquisition group 150 may be further equipped with an optimised buffer configured to temporarily store one or more images $I(t(i))$. According to an exemplary embodiment of the present invention, the buffer may have a buffer size of two, so that the identification unit 310 is provided with an image to be processed while the acquisition group 150 is acquiring the next image.

Thanks to the training strategies and the hardware described above, the identification unit 310 according to the embodiments of the invention is able to carry out image analysis in near real time, with very short inference times (e.g., lower than 10 ms), high frequency capabilities, and low latencies directly on board, without the need of external computation units.

Considering again Fig. 3, in accordance with an embodiment of the present invention, a tracking unit 330 is configured to process the output data $ID(i)$ generated by the identification unit 310 (containing identifications of poultry presences $O(k)$ and corresponding bounding boxes $BB(k)$) in order to calculate/update respective poultry tracks $T(k)$, each indicating the path followed by a bird along the loading conveyor belt 135.

According to an embodiment of the present invention, the tracking unit 330 is configured to generate the tracks $T(k)$ by making use of a tracking algorithm, such as a SORT (Simple Online Real-Time Tracking) family algorithm based on the Kalman filter and the Hungarian algorithm, described in the article "SIMPLE ONLINE AND REALTIME TRACKING" by Alex Bewley, Zongyuan Ge, Lionel Ott, Fabio Ramos and Ben Upcroft.

According to an advantageous embodiment of the present invention, the tracking unit 330 is configured to dynamically select (e.g., during its turning on) a tracking algorithm among a set of (e.g., two or more) available different tracking algorithms. For example, this set of tracking algorithms may include the SORT and the Deep SORT algorithms.

According to an embodiment of the present invention, the tracking unit 330 generates the tracks T(k) by processing the output data ID(i) relating to a corresponding group of images I(t(i)) acquired at successive time instants t(i), and more particularly by correlating the identifications of poultry presences O(k) and associated bounding boxes BB(k) obtained for each image I(t(i)) of the group.

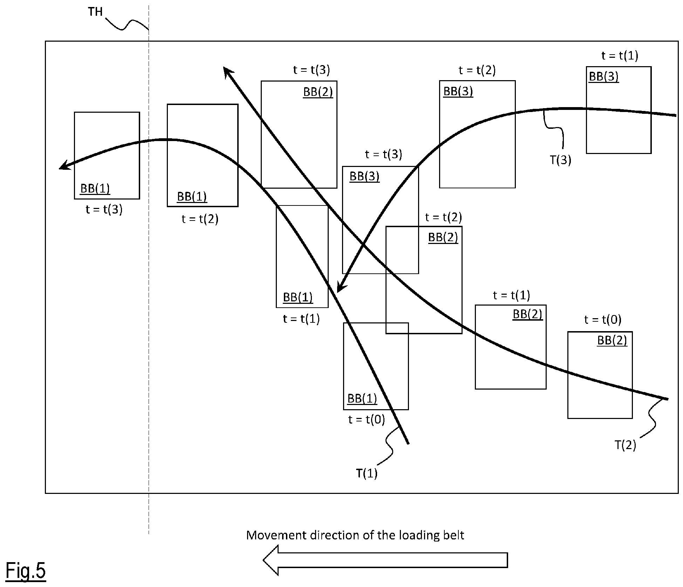

Fig. 5 shows in a schematic and simplified manner the generation of three tracks T(1), T(2), T(3) followed by three birds along the loading conveyor belt 135 and obtained by the tracking unit 330 by processing the output data ID(0), ID(1), ID(2), ID(3) relating to four successive time instants t (0), t(1), t(2), t(3), provided by the identification unit 310. In this example:

the output data ID(0) relating to the time instant t = t(0) comprises two poultry presences O(1), O(2) with the corresponding bounding boxes BB1(1), BB(2), (identifying the presence of two birds in the image I(t(0)) acquired at the time instant t(0));
the output data ID(1) relating to the time instant t = t(1) comprises three poultry presences O(1), O(2), O(3) with the corresponding bounding boxes BB(1), BB(2), BB(3) (identifying the presence of three birds in the image I(t(1)) acquired at the time instant t(1));
the output data ID(2) relating to the time instant t = t(2) comprises three poultry presences O(1), O(2), O(3) with the corresponding bounding boxes BB(1), BB(2), BB(3) (identifying the presence of three birds in the image I(t(2)) acquired at the time instant t(2));
the output data ID(3) relating to the time instant t = t(3) comprises three poultry presences O(1), O(2), O(3) with the corresponding bounding boxes BB(1), BB(2), BB(3) (identifying the presence of three birds in the image I(t(3)) acquired at the time instant t(3)).

In the example considered, at the time instant t(0), only two birds were present on the loading conveyor belt 135, while a third (new) bird arrived on the loading conveyor belt 135 at the time instant t(1).

By correlating the evolution over time of the coordinates of the bounding boxes BB(k) of the four images I(t(0)), I(t(1)), I(t(2)) ed I(t(3)), the tracking unit 330 is therefore able to calculate the path followed over time by each of the three birds identified. It is emphasized that the tracking algorithm implemented by the tracking unit 330 (such as the SORT algorithm) is able to predict the temporal and spatial evolution of the bounding boxes, so as to manage efficiently also the situations where the birds are temporarily not visible (for example in one or more of the images I(t(i) considered) because temporarily concealed from view, for example owing to the presence of other nearby birds.

Considering again Fig. 3, according to an embodiment of the present invention, a counting unit 340 is configured to process the tracks T(k) calculated by the tracking unit 330 in order to calculate a count indicating a number of birds which have reached the cage 101.

According to an embodiment of the present invention, the counting unit 340 is configured to update (for example, to increase by one) a counter CT whenever the coordinates (for example the centre coordinates) of a bounding box BB(k) of a track T(k) have reached or exceeded threshold values TH indicating that the bird corresponding to said bounding box has reached the cage 101.

With reference again to the example shown in Fig. 5, the threshold TH is represented by a vertical virtual line located at the left-hand end of the image, at the loading conveyor belt 135. In this case, since at the time instant t(3), the coordinates of the centre of the bounding box BB(1) have exceeded this vertical line, the counting unit 340 updates (for example, increases by one) the counter CT in order to indicate that a bird has reached the cage 101.

According to an embodiment of the present invention, in order to avoid occurrences of false multiple counts of a same bird in case the corresponding track T(k) crosses multiple times the threshold TH (for example because of oscillations of the loading conveyor belt 135 and/or of erratic movements of the poultry), instead of updating the counter CT every time (the centre coordinates of) a bounding box BB(k) reaches or exceeds the threshold TH, the updating of counter CT may be carried out in the following way.

When the coordinates (for example the centre coordinates) of a bounding box BB(k) of a track T(k) reach or cross for the first time the threshold TH, the counter CT is increased, while the centre coordinates are memorized together with the corresponding index k in a corresponding register. If the track T(k) corresponding to an index k that is already included in the register (i.e., a track corresponding to an already counted object) exhibits a backward evolution (i.e., when the centre coordinates exit from the threshold region TH by moving backwards), the counter CT is not updated.

According to an embodiment of the present invention, in order to further increase the robustness of the counting, instead of being a simple virtual line, the threshold TH may be a (preferable, configurable) bidimensional region of the image, for example identified by coordinates of its central position in the image and by a corresponding width, and every new track T(k) that originates directly inside the threshold region (symptom of a malfunctioning in the identification and/or tracking) is discarded.

Considering again Fig. 3, according to an embodiment of the present invention, an output unit 350 is configured to output the updated value of the counter CT. According to an embodiment of the present invention, said updated value of the counter CT is supplied by the output unit 350 to the control unit 138 of the caging machine 100, 100' for control of the latter. For example, according to an embodiment of the present invention, the control unit 138 may stop the loading conveyor belt 135 once the counter CT has reached a target value indicating a desired number of birds, i.e. once the cage 101 has been filled with the desired number of birds. According to another embodiment of the present invention, the output unit 350 itself may directly send to the control unit 138 a command for stopping the loading conveyor belt 135.

According to an embodiment of the present invention, instead of or in addition to stoppage of the loading conveyor belt 135, the control unit 138 may also direct the loading conveyor belt 135 towards a further cage 101 to be filled.

According to an embodiment of the present invention, the counting unit 155 may be additionally configured to automatically interrupt the counting operations if the image acquisition capabilities of the acquisition group 150 are impaired, for example because the image acquisition device 150(1) is dirty, malfunctioning, or obstructed by some obstacle. In this way, it is assured that the counting operations are carried out only when optimal image acquisition conditions are assured. According to an embodiment of the present invention, the assessment of impaired image acquisition capabilities may be carried out by the identification unit 310 itself. For example, the neural network used by the identification unit 310 may be also trained to recognize malfunctioning, dirty, and/or obstructed conditions from the received images I(t(i)).

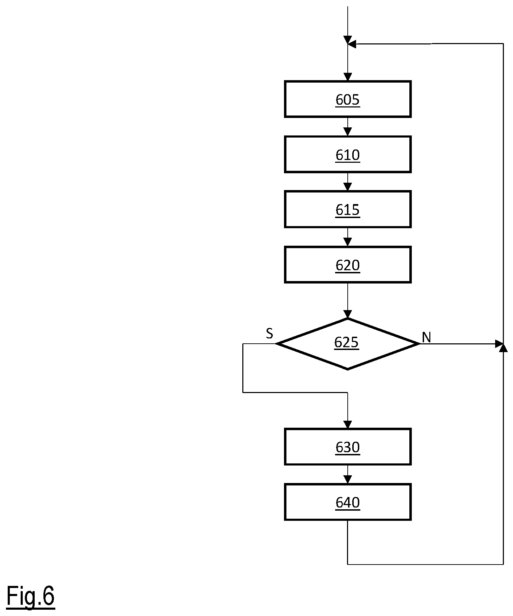

Fig. 6 shows in the form of functional blocks the main operations performed by the counting system 140 for counting birds during loading thereof into a cage 101 by the caging machine 100, 100' according to an embodiment of the present invention.

The first operation (block 605) involves the acquisition of images or a video of a portion of the loading conveyor system 135 by the acquisition group 150.

At this point, the image collection unit 305 collects and preferably performs initial processing (pre-processing) of the images (block 610).

The images are than processed by the identification unit 310 in order to identify the presence of birds and calculate the coordinates of corresponding bounding boxes (block 615).

Then the tracking unit 330 processes the poultry presences identified (and the corresponding bounding boxes) in order to calculate (or update) poultry tracks identifying the paths followed by the poultry on the loading conveyor belt 135 (block 620).

If one of the bounding boxes of the poultry tracks reaches or passes beyond the line (or the bidimensional region) corresponding to the threshold TH (output N of block 625), the operating flow returns to the block 605 with newly acquired images.

If a bounding box of a track reaches (or passes beyond) the line corresponding to the threshold TH (output Y of block 625), the counting unit 340 therefore updates the counter CT (block 630).

Following updating of the counter CT, the output unit 350 sends the updated value of the counter CT to the control unit 138 of the caging machine 100, 100' (block 640) and then the operating flow returns to block 695, with newly acquired images. If the counter CT reaches a target value indicating a desired number of birds, i.e. once the cage 101 has been filled with the desired number of birds, the control unit 138 of the caging machine 100, 100' may stop the loading conveyor belt 135 and/or direct it towards a new cage 101. In accordance with a further embodiment of the present invention, the output unit 350 may directly command stoppage of the loading conveyor belt 135 (when the counter CT reaches the target value) by sending a belt stop command to the control unit 138.

According to an embodiment of the present invention, in order to further improve the efficiency (in terms of throughput, responsivity and resource usage) of the counting system 140, the operations carried out by the identification unit 310 and the operations carried out by the tracking unit 330 may be performed using separate threads, operating asynchronously and independently.

Differently from the known systems currently used, which estimate for example the number of birds loaded according to their weight, the counting system 140 according to the embodiments of the invention described here has a high degree of accuracy and allows the cages 101 to be automatically loaded with a number of birds which coincides with (or is very close to) the desired target number.

The counting system 140 in accordance with the embodiments described here was tested in practice, and the measured accuracy, understood as being:

$$1 - (|CT - CR|/CR),$$

where CT is the count performed by the counting system 140 and CR is the actual count performed manually, was equal to 98.66%.

Obviously, in order to meet local and specific needs, a person skilled in the art may make numerous logical and/or physical alterations and modifications to the invention described above. More particularly, although the present invention has been described with specific reference to preferred embodiments thereof, it must be understood that various omissions, replacements and modifications are possible with regard to the form and the details, as well as other embodiments.

## Claims

1. A counting system (140) for counting poultry in a caging machine (100; 100') configured to convey poultry on a conveyor belt (135) in order to introduce them into a cage (101), the counting system comprising:

an acquisition group (150) for acquiring a sequence of images of a same portion of said conveyor belt during successive time instants;
a processing apparatus (155) comprising:

an identification unit (310) configured to process the sequence of images in order to identify the presence of said poultry in each image;
a tracking unit (330) configured to calculate poultry tracks (T(k)) based on the identified poultry presence, each poultry track (T(k)) indicating the path followed by a respective bird along the conveyor belt (135);
a counting unit (340) configured to calculate a count indicating the number of birds that have reached the cage (101) on the basis of the calculated tracks (T(k));
an output unit (350) for outputting the calculated count for control of the caging machine.

2. The counting system (140) of claim 1, wherein said identification unit (310) comprises an object detection unit that implements a neural network model trained to optimize the ability of said neural network model to recognize the poultry presence in images.

3. The counting system (140) of claim 2, wherein said neural network model is trained with a set of training images comprising training images depicting poultry, and wherein at least a portion of said training images depicting poultry have been subjected to one or more of the following data augmenting operations:

image flip;
image rotation;
image scaling;
image translation;
image saturation variation;
image hue variation;
image brightness variation.

4. The counting system (140) of any of the preceding claims, wherein the identification unit (310) and the tracking unit (330) are configured to operate asynchronously and independently to each other.

5. The counting system (140) according to any one of the preceding claims, wherein said identification unit (310) comprises an object detection unit configured to calculate for each poultry presence identified in an image coordinates of a corresponding bounding box (BB(k)) indicating a position and space occupied by said poultry presence in said image.

6. The counting system (140) of claim 5, wherein said tracking unit (330) implements a tracking algorithm configured to calculate each poultry track (T(k)) corresponding to a bird based on the evolution over time of the coordinates of the bounding boxes (BB(k)) calculated for the presence of said bird in the images of said image sequence.

7. The counting system (140) of claim 6, wherein said counting unit (340) is configured to update a counter (CT) whenever the coordinates of a bounding box (BB(k)) of a poultry track (T(k)) have reached or exceeded threshold values (TH) indicating that the corresponding bird has reached the cage (101).

8. The counting system (140) of claim 7, wherein said threshold values (TH) correspond to:

coordinates of a line in said image, or
coordinates of a bidimensional region in said image.

9. The counting system (140) of any one of the preceding claims, wherein said acquisition group (150) and said processing apparatus (155) are part of a single embedded hardware unit.

10. The counting system (140) of any of the preceding claims, further comprising a buffer configured to temporarily store one or more images of said sequence of images, the identification unit (310) being configured to process one of the images stored in the buffer to identify the presence of said poultry.

11. The counting system (140) according to any one of the preceding claims, wherein said acquisition group (150) comprises:

a camera or video camera (150(1)) which captures said portion of said conveyor belt (135), and
an illuminating device (150(2)) for illuminating said portion of said conveyor belt (135).

12. The counting system (140) of claim 11, wherein said camera (150(1)) or video camera is an infrared camera or video camera, and said illuminating device (150(2)) is an infrared illuminating device.

13. A caging machine (100; 100'), comprising:

a conveyor belt (135) for conveying poultry towards a cage (101);
the counting system (140) according to any one of the preceding claims.

14. The caging machine (100; 100') of claim 13, further comprising:

a control unit (138) in communication with the output unit of the counting system, wherein said control device is configured to stop the conveyor belt (135) or to direct the conveyor belt towards a further cage when the calculated count has reached a value corresponding to a predefined target value of poultry.

15. A method of counting poultry in a caging machine (100) configured to convey poultry on a conveyor belt (135) in order to introduce them into a cage (101), the method comprising:

acquiring (605) a sequence of images of a same portion of said conveyor belt (135) during successive time instants;

processing (615) the sequence of images in order to identify the presence of said poultry in each image;

calculating (620) poultry tracks based on the identified poultry presence, each poultry track indicating the path followed by a respective bird along the conveyor belt;

calculating (630) a count indicating a number of birds that have reached the cage based on the calculated tracks,

outputting (640) the calculated count for control of the caging machine.

Fig. 1A

Fig. 1B

<u>Fig. 2</u>

Fig.3

Fig.4

Fig.5

Movement direction of the loading belt

Fig.6

Europäisches
Patentamt
European
Patent Office
Office européen
des brevets

## EUROPEAN SEARCH REPORT

**Application Number**

EP 25 18 2653

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 579 188 A1 (PAS REFORM BV [NL]) 10 April 2013 (2013-04-10) | 1,4-15 | INV. A01K45/00 |
| Y | * paragraphs [0006] - [0009]; claims 1,5,6,8; figures 1-3 * | 2,3 | |
| | ----- | | |
| Y | CN 115 937 791 A (UNIV SOUTH CHINA AGRICULT) 7 April 2023 (2023-04-07) | 2,3 | |
| A | * claims 1,3-6 * | 1,4-15 | |
| | ----- | | |
| A | GB 2 420 242 A (ENJOY BIRDS MORE LTD [GB]) 17 May 2006 (2006-05-17) * page 2 lines 7-17 * | 1-12 | |
| | ----- | | |
| A | JP H03 263284 A (AIPII KK) 22 November 1991 (1991-11-22) * claim 1 * | 1-15 | |
| | ----- | | |

**TECHNICAL FIELDS SEARCHED (IPC)**

A01K

The present search report has been drawn up for all claims

| Place of search | Date of completion of the search | Examiner |
|---|---|---|
| The Hague | 2 November 2025 | Spitz, Thomas |

EPO FORM 1503 03.82 (P04C01)

## ANNEX TO THE EUROPEAN SEARCH REPORT
## ON EUROPEAN PATENT APPLICATION NO.

EP 25 18 2653

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2025

| Patent document cited in search report | | Publication date | Patent family member(s) | | Publication date |
|---|---|---|---|---|---|
| EP 2579188 | A1 | 10-04-2013 | EP | 2579188 A1 | 10-04-2013 |
| | | | PL | 2579188 T3 | 31-10-2018 |
| CN 115937791 | A | 07-04-2023 | NONE | | |
| GB 2420242 | A | 17-05-2006 | NONE | | |
| JP H03263284 | A | 22-11-1991 | NONE | | |

EPO FORM P0459

For more details about this annex : see Official Journal of the European Patent Office, No. 12/82